# EUROPÄISCHE PATENTANMELDUNG

(11) **EP 1 870 151 A1**
(43) Veröffentlichungstag der Anmeldung: **26.12.2007**
(21) Anmeldenummer: 06115840.8
(22) Anmeldetag: 21.06.2006
(51) Int. Cl.: B01D 46/22, B60H 3/06

(54) **Filtervorrichtung**

(71) Anmelder: Krapf & Lex Nachf. Verkehrstechnik & Co. KG, D-92637 Weiden (DE)
(72) Erfinder: Lex, Ernst, 9571 Schirnitz (AT)
(74) Vertreter: Lermer, Christoph

(57) **Zusammenfassung**

Die Erfindung bezieht sich auf eine Filtervorrichtung 1 zum Abscheiden von Partikeln aus einem Luftstrom, insbesondere von schnee-, eis- oder wasserhaltigen Partikeln. Zu diesem Zweck wird ein endloses metallisches Gewebeband 2 zwischen eine Heizrolle 3 und eine Antriebsrolle 4 gespannt. Die senkrecht auf die Oberfläche des Gewebebandes 2 auftreffende vorgereinigte Luft tritt zweimal durch das Gewebeband 2 hindurch und wird so von störenden feinen Partikeln befreit. Das Gewebeband 2 wird mittels der Antriebsrolle 4 kontinuierlich oder intermittierend bewegt. In dem Abschnitt des Gewebebandes 2, der in Kontakt mit der von Heizelementen 9, 10 beheizten Heizrolle 3 steht, werden die im Gewebeband 2 eingelagerten Eis- und Schneepartikel zum Schmelzen gebracht und das Gewebeband 2 bei hohen Temperaturen getrocknet. Auf diese Weise wird das Gewebeband 2 kontinuierlich gesäubert und die einwandfreie Funktion der Filtervorrichtung 1 gewährleistet.

## Beschreibung

### Technisches Gebiet

Die Erfindung betrifft eine Filtervorrichtung zum Abscheiden von Partikeln aus einem Luftstrom, insbesondere von schnee-, eis-, oder wasserhaltigen Partikeln, umfassend ein Filtermedium zum Herausfiltern von Partikeln aus dem Luftstrom.

### Stand der Technik

Im Bereich der Fahrzeugtechnik ist es bekannt, dass Fahrzeuge, beispielsweise elektrische Lokomotiven, Diesellokomotiven, klimatisierte Reisezugwaggons, usw. erhebliche Mengen an Kühlluft benötigen. Die Kühlluft wird diesen Fahrzeugen von Außen her zugeführt.

Da die von außen zugeführte Luftströmung Verunreinigungen aufweist, durchläuft die Luftströmung in der Regel zunächst eine Einrichtung zur Abscheidung von Grobverunreinigungen. Bekanntermaßen werden zu diesem Zweck Luftansauggitter eingesetzt.

Allerdings hat sich gezeigt, dass feinere Partikel, insbesondere feine und mittelgroße Schneepartikel, durch Luftansauggitter nicht oder nur unzureichend abgeschieden werden können. Um dies zu vermeiden, kann dem Luftansauggitter ein Feinfilter mit einem Feingitter nachgeschaltet werden. Bekannte Feinfiltereinrichtungen umfassen eine Filterplatte, die aus einer planebenen Filtermatte aus Fasergewebe oder Drahtgewebe, beispielsweise aus Glasfaserwerkstoff, besteht.

Mittels des Feinfilters können kleinere Partikel wie Schneepartikel zwar wirkungsvoll abgeschieden werden, jedoch verstopfen die Schneepartikel den Feinfilter bereits nach kurzer Zeit und dämpfen bzw. blockieren so den Luftstrom. Die Filtermatte wird in kurzer Zeit luftundurchlässig und funktionsunfähig. Dem entsprechend muss die mit Feinverunreinigungen belegte und gefüllte Filtermatte in kurzen Zeitabständen ausgetauscht und entsorgt werden.

### Darstellung der Erfindung

### Technische Aufgabe

Ausgehend davon ist es die Aufgabe der vorliegenden Erfindung, eine Filtervorrichtung bereit zu stellen, mit der Feinpartikel aus einem Luftstrom wirkungsvoll herausgefiltert werden können, ohne die Filtermatte aufgrund von Verunreinigungen in kurzen Zeitabständen auszutauschen.

### Technische Lösung

Diese Aufgabe wird gelöst durch eine Filtervorrichtung zum Abscheiden von Partikeln aus einem Luftstrom nach Anspruch 1.

Die Filtervorrichtung zum Abscheiden von Partikeln aus einem Luftstrom, insbesondere von schnee-, eis- oder wasserhaltigen Partikeln, umfasst ein Filtermedium zum Herausfiltern von Partikeln aus dem Luftstrom. Außerdem weist die Filtervorrichtung Beheizungsmittel zum Beheizen wenigstens eines Abschnittes des Filtermediums auf.

Unter einem Abschnitt bzw. Flächenabschnitt des Filtermediums wird im Rahmen der Erfindung ein Bereich bzw. Flächenbereich des in der Regel flächig ausgebildeten Filtermediums verstanden.

Mit Hilfe der Erfindung können feine Partikel aus einem Luftstrom, der beispielsweise durch ein Luftansauggitter von Grobverunreinigungen vorgereinigt worden ist, herausgefiltert werden. Insbesondere die aufgrund ihrer Feuchtigkeit und der Tendenz, auf der Filtermatte zu gefrieren, problematischen feinen und mittelgroßen Schneeflocken können aus dem Luftstrom entnommen werden.

Durch das Vorsehen eines Beheizungsmittels kann das Gewebe des Filtermediums außerdem getrocknet werden. Dadurch wird verhindert, dass evtl. im Gewebe zurückgehaltenes Schmelzwasser beim erneuten Durchströmen mit kalter Luft gefriert und den Luftstrom durch das Gewebe verhindert.

Während ein erster Abschnitt des Filtermediums bestimmungsgemäß mit Luftströmung beaufschlagt wird, wird erfindungsgemäß ein zweiter Bereich des Filtermediums durch Abschmelzen von gefrorenen Partikeln, die die Maschendurchbrüche des Gewebegitters verstopfen, befreit. Insbesondere ist der Abschnitt des Filtermediums, der während des bestimmungsgemäßen Betriebs beheizt wird, außerhalb der Luftströmung angeordnet. Durch die Beheizung wird die Filterplatte kontinuierlich gereinigt, ohne dass der Betrieb des Filters unterbrochen werden muss.

Insbesondere ist das Filtermedium beweglich angeordnet derart, dass ein im Luftstrom angeordneter erster Abschnitt des Filtermediums als Ganzes oder abschnittsweise in den Wirkungsbereich der Beheizungsmittel bewegbar ist. Das Filtermedium kann beispielsweise seitlich relativ zur Richtung des Luftstroms bewegbar sein.

Die Beheizung kann beispielsweise durch Infrarotstrahlung, durch Heißluft, durch elektrische Heizung, jedoch auch auf jede andere bekannte Art bewerkstellig werden, wobei die zur Verfügung stehende Energie zum Beispiels mittels eines Wärmetauschers genutzt werden kann. Relevant ist lediglich, dass Partikel, die Feuchtigkeit enthalten, durch Wärmezufuhr aus der Fasermatte gelöst werden, sodass ein Zufrieren und damit ein Verstopfen des Filters verhindert wird.

In einer bevorzugten Ausführungsform sind die Beheizungsmittel in einem Bereich außerhalb des durch die Filtervorrichtung strömenden Luftstroms angeordnet. Entsprechend kann ein bestimmter Abschnitt des Filtermediums zum Beheizen durch die Heizmittel aus dem Luftstrom heraus bewegt werden. Der nicht beheizte Teil des Filtermediums befindet sich gleichzeitig wenigstens teilweise im Luftstrom und erfüllt, während der beheizte Abschnitt des Filtermediums außerhalb des Luftstroms gereinigt wird, die bestimmungsgemäße Funktion der Filtervorrichtung.

Insbesondere kann das Filtermedium als Gewebeband, beispielsweise als beschichtetes oder unbeschichtetes Gewebeband, ausgebildet sein. Das Gewebeband kann ein Fasergewebe (aus Kunststoff) oder ein Drahtgewebe, insbesondere ein Gewebegitter aus Metall, beispielsweise aus Edelstahl/rostfreiem Stahl, sein. Das Gewebeband dient als Feinabscheider bzw. Feinfilter für schnee-, eis- oder wasserhaltige Partikel. Metallische Gewebegitter weisen hohe Robustheit bei einfacher Herstellung auf. Ein metallisches Gewebegitter kann im Rahmen der vorliegenden Erfindung somit über einen langen Zeitraum, ohne dass Wartungsarbeiten durchgeführt werden müssten, im Einsatz sein.

Bevorzugt ist das Filtermedium als endloses Band ausgebildet. Das endlose Band kann durch Rollen bzw. Walzen umgelenkt und geführt werden. Das endlose Band kann zwischen Rollen so gespannt werden, dass ein Luftstrom im Wesentlichen senkrecht zu der von zwei Rollen definierten Ebene auf das Filtermedium auftrifft. Das Filtermedium wird vom Luftstrom durchströmt und gereinigt.

Bevorzugt weist die Vorrichtung wenigstens eine von einem Antrieb angetriebene Transportrolle auf. Mittels dieser Rolle wird ein zu reinigender Abschnitt des Filtermediums zur Reinigung mittels Beheizen aus dem Luftstrom heraus in den Bereich der Beheizungsmittel transportiert. Ein durch die Wärmebehandlung bereits gereinigter Abschnitt des Filtermediums wird dafür in den Strömungs-/Filterbereich hinein transportiert, um Feinpartikel aus dem auftreffenden Luftstrom heraus zu filtern.

Insbesondere ist der Antrieb zu einem kontinuierlichen und/oder intermittierenden Antrieb der Transportrolle ausgebildet. Für den Antrieb sind alle möglichen bekannten Antriebsarten denkbar, beispielsweise ein Antrieb mittels Druckluft, mittels eines Elektromotors, usw.

In einer bevorzugten Ausführungsform umfassen die Beheizungsmittel wenigstens eine Beheizungsrolle und eine der Beheizungsrolle zugeordnete Heizeinrichtung zum Erwärmen der Beheizungsrolle. Die Beheizungsrolle und die Transportrolle können entweder identisch sein oder, besonders bevorzugt, die Beheizungsrolle kann eine zur Transportrolle beabstandet angeordnete Rolle sein, wobei das endlose Filtermedium zwischen den beiden Rollen gespannt ist. Im letztgenannten Fall kann die Filtervorrichtung so aufgebaut sein, dass die Luft das Filtermedium zweimal durchströmt. Zunächst durchströmt die Luft die Vorderseite des zwischen den Rollen gespannten Filtermediums, anschließend die Rückseite. Auf diese Weise wird eine effektive Reinigung der Luft von Feinpartikeln gewährleistet.

Insbesondere weist die Beheizungsrolle einen inneren Hohlraum auf, in dem die Heizeinrichtung angeordnet ist. Die Mantelfläche der Beheizungsrolle wird in diesem Fall von innen her beheizt, wobei die Wärme auf die Rollenoberfläche und damit auf das Filtermedium übertragen wird. Es wäre auch denkbar, durch den inneren Hohlraum (beispielsweise eine Leitung) ein Medium zur Wärmeübertragung zu transportieren, welches Wärme an die Rolle abgibt.

Die der Beheizungsrolle zugeordnete Heizeinrichtung kann jedoch auch benachbart zur Beheizungsrolle derart angeordnet sein, dass die Rolle von außen her durch die Heizeinreichung erwärmbar ist. Beispielsweise kann die Heizeinrichtung relativ zur Beheizungsrolle außerhalb der Mantelfläche, aber in Kontakt oder in der Nähe der Mantelfläche der Beheizungsrolle angeordnet sein. Die Heizeinrichtung wird insbesondere an einer Stelle in der Nähe des Umfangs der Rolle angeordnet sein, über den das Filtermedium nicht geführt wird. Die Erwärmung der Rolle von außen her und von innen her kann auch kombiniert werden.

Bevorzugt umfasst die Filtervorrichtung wenigstens zwei Rollen, deren relativer Abstand veränderbar ist. Beispielsweise können eine Antriebsrolle und eine erwärmte bzw. erwärmbare Umlenkrolle (Be heizungsrolle) vorgesehen sein, zwischen denen das Filtermedium eingespannt ist. Durch die Veränderbarkeit des Abstands können unterschiedliche Gewebebänder mit einer gewünschten Vorspannung zwischen den Rollen gespannt werden.

Insbesondere können die Rollen jeweils vertikal angeordnet sein.

Die Vorrichtung umfasst insbesondere eine erste Führungsschiene zur Führung eines ersten Rands des Filtermediums. Die erste Führungsschiene kann beispielsweise eine obere Führungsschiene, die im Wesentlichen oberhalb oder im oberen Bereich zweier vertikal angeordneter Rollen angeordnet ist, sein. Die obere Führungsschiene kann als Schienenkasten ausgebildet sein.

Vorzugsweise weist die Vorrichtung eine zweite Führungsschiene zur Führung eines zweiten Rands des Filtermediums auf. Die zweite Führungsschiene kann eine untere Führungsschiene zur Führung eines unteren Rands des Filtermediums sein. Sie kann unterhalb oder im unteren Bereich zweier vertikal angeordneter Rollen positioniert sein.

Insbesondere kann die untere Führungsschiene als Wassersammelkasten zum Sammeln des durch die Erwärmung aus dem Filtermedium ausgetretenen Wassers sein. Besonders bevorzugt ist der Wassersammelkasten mit einer Heizvorrichtung versehen, sodass die im Wassersammelkasten gesammelte Flüssigkeit nicht wieder einfriert, bevor sie abtransportiert werden kann.

Die Vorrichtung kann als kompakte Einheit, die als Ganzes von einem Filtersystem eines Fahrzeugs entfernbar bzw. als Ganzes an einem Filtersystem eines Fahrzeugs anordenbar ist, ausgebildet sein. Insbesondere kann die Einheit als flacher Filtereinschub ausgebildet sein. Eine derartige Einheit kann beispielsweise seitlich in einen Luftkanal eingeschoben werden. Ferner kann sie als Einheit vor oder hinter einer Ausgangsöffnung angeordnet werden.

### Kurze Beschreibung der Zeichnungen

Weitere Merkmale und Vorteile der vorliegenden Erfindung werden aus der nachfolgenden detaillierten Beschreibung eines Ausführungsbeispieles anhand der beigefügten Figuren deutlich. Die Figuren zeigen:

Fig. 1 eine Draufsicht auf die erfindungsgemäße Filtervorrichtung;

Fig. 2 eine vertikale Schnittansicht der erfindungsgemäßen Filtervorrichtung;

Fig. 3 eine weitere vertikale Schnittansicht der erfindungsgemäßen Filtervorrichtung;

Fig. 4 eine horizontale Schnittansicht der erfindungsgemäßen Filtervorrichtung; und

Fig. 5 eine perspektivische Ansicht einer als kompakte Einheit ausgebildeten erfindungsgemäßen Filtervorrichtung. Weg(e) zur Ausführung der Erfindung

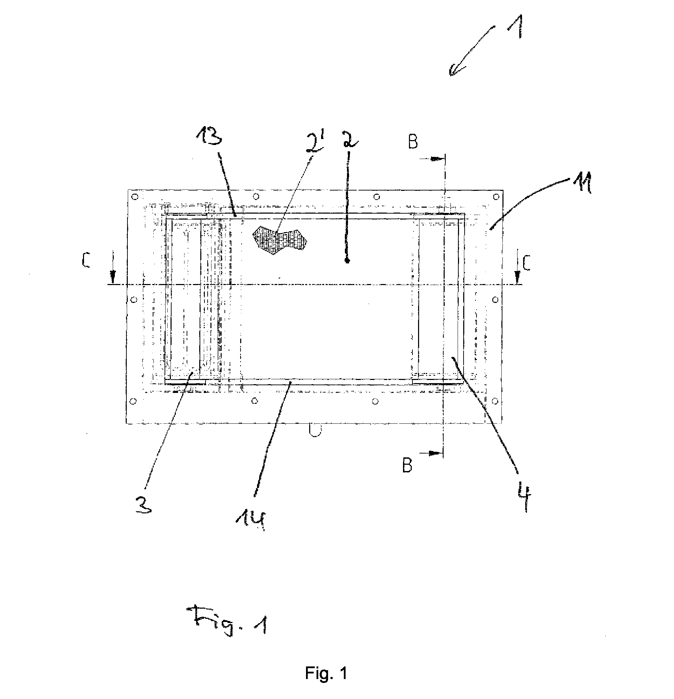

In der Figur 1 ist die erfindungsgemäße Filtervorrichtung 1 schematisch in einer Draufsicht dargestellt. Die Luftströmungsrichtung verläuft im Wesentlichen senkrecht in die Blattebenen hinein.

Die beispielsweise durch ein Luftansauggitter vorgefilterte Luft trifft, durch einen Luftkanal herantransportiert, auf das Gewebegitter 2, dessen Struktur in einem Ausschnitt 2' angedeutet ist, auf. Das Gewebegitter ist im vorliegenden Ausführungsbeispiel als Metallgewebegitter, bestehend aus rostfreiem Stahl, ausgebildet.

Das Gewebegitter 2 ist als endloses geschlossenes Band senkrecht zur Luftströmungsrichtung über zwei vertikal angeordnete Rollen 3 und 4 gespannt. Insbesondere kann der relative Abstand der Rollen 3 und 4 durch eine entsprechende Einrichtung verändert werden, um stets eine gewünschte Spannung im Gewebeband 2 aufrecht zu erhalten. Zur Führung des Gewebegitters 2 ist oberhalb und unterhalb des Bands 2 jeweils eine Führungsschiene 13 bzw. 14 angeordnet. Die untere Schiene 14 kann die Funktion eines Wassersammelkastens für das aus dem Gewebegitter 2 abfließende Wasser übernehmen.

Die Filtervorrichtung 1 ist eine Einheit aus verschiedenen Bauteilen, die einen Rahmen 11, bilden, wobei an den vertikalen Seiten die Walzen, an der oberen Seite die obere Führungsschiene, und an der unteren Seite die untere Führungsschiene angeordnet ist.

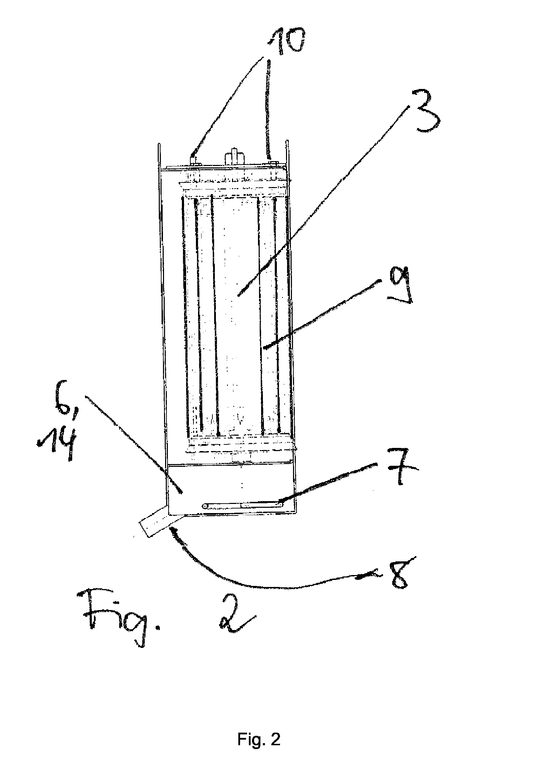

Die Figur 2 zeigt einen vertikalen Schnitt durch eine erste Rolle 3, die im folgenden als Heizrolle bezeichnet wird. Im Inneren der Heizrolle 3 sind Heizelemente 9 angeordnet, die über Anschlüsse 10 mit Energie bzw. mit einem Wärmeübertragungsmedium versorgt werden. Die Heizelemente 9 können ortsfest bezüglich des Rahmens 11 innerhalb der Rolle 3 oder auch beweglich an deren Innenseite der Rolle 3 montiert sein.

Die Heizelemente 9 heizen die äußere Mantelfläche der Heizrolle 3 derart auf, dass im Gewebe 2 vorhandenes gefrorenes Wasser beim Kontakt des Gewebegitters 2 mit der Mantelfläche der Heizrolle 3 abschmilzt und das Gewebegitter 2 abtrocknet.

Die Figur 2 zeigt einen Schienenkasten 14, der unterhalb der Heizrolle 3 durchgehend über die gesamte Breite der Filtervorrichtung 1 unterhalb des Gewebebandes 2 angeordnet ist. Der Schienenkasten 14 ist als Wassersammelkasten 6 ausgebildet, um das aus dem Gewebegitter 2 abgetaute Wasser abzufangen. Im Wassersammelkasten kann ein weiteres Heizelement 7 angeordnet sein, um zu verhindern, dass das aufgesammelte Schmelzwasser im Wassersammelkasten 6 gefriert, bevor es den Wassersammelkasten über einen Wasserauslass 8 zum Auslass des Wassers aus dem Wassersammelkasten 6 verlässt.

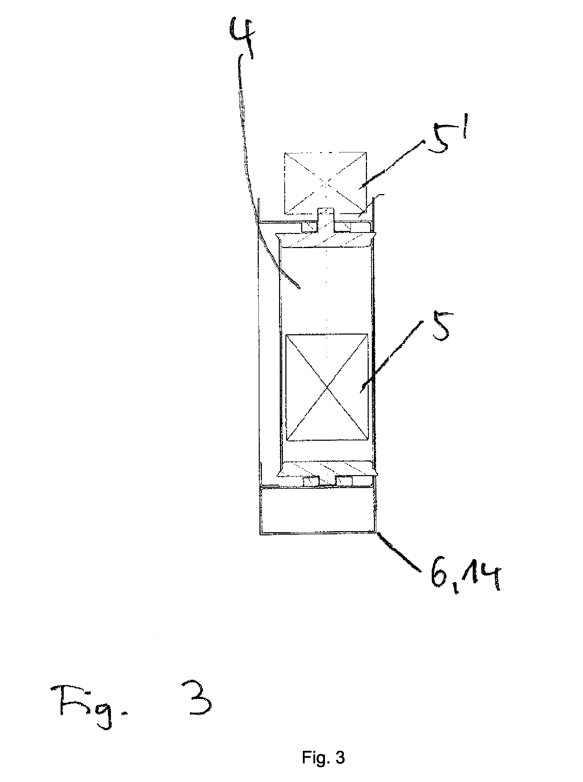

In der Figur 3 ist ein vertikaler Schnitt (B-B) durch die von der Heizrolle 3 beabstandet angeordnete zweite Rolle 4 dargestellt. Innerhalb der Rolle 4 ist ein Antrieb 5, beispielsweise ein Elektromotor angeordnet, der die (im folgenden so genannte) Antriebsrolle 4 in Rotation versetzt. Dadurch wird das Gewebeband 2 über die Oberfläche der Antriebsrolle 4 bewegt. Alternativ dazu kann ein Motor 5' auch außerhalb der Rolle, in diesem Fall oberhalb der Rolle, angeordnet werden.

Der Antrieb 5 bzw. 5' arbeitet kontinuierlich und/oder mit Unterbrechungen (intermittierend). Entsprechend wird das Gewebeband 2 kontinuierlich mit einer Geschwindigkeit derart bewegt, dass das vom Gewebeband 2 aufgenommene gefrorene Wasser im Kontakt mit der gegenüberliegenden Heizrolle 3 auftaut und das Gewebeband 2 in diesem Abschnitt abgetrocknet wird. Ähnlich wird beim intermittierenden Betrieb stets ein Abschnitt des Gewebebandes 2 von Eis befreit und/oder getrocknet, der sich für eine bestimmte Zeitspanne in Kontakt mit der Heizrolle 3 befindet.

Der bereits im Zusammenhang mit der Figur 2 beschriebene Wassersammelkasten 6 erstreckt sich im Bereich unter der Heizrolle 3, der Antriebsrolle 4 und dem Gewebeband 2.

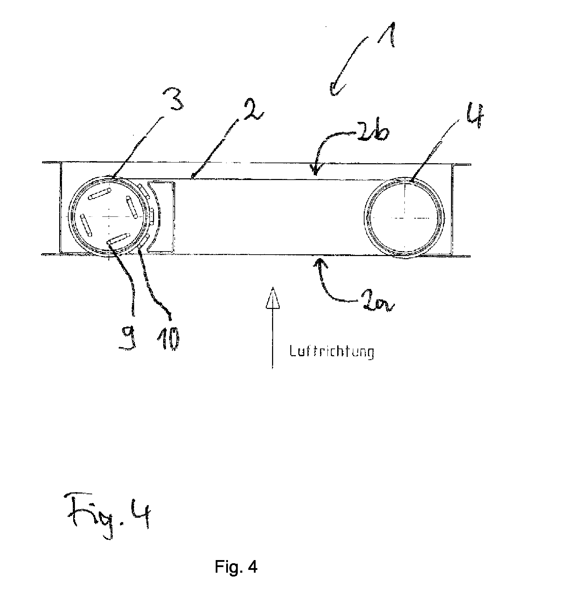

Die Figur 4 zeigt eine horizontale Schnittansicht (C-C) der erfindungsgemäßen Filtervorrichtung 1. Das über die beiden Rollen 3 und 4 geführte Gewebeband 2 weist eine in Vorderseite 2a und eine Rückseite 2b auf. Die Luftflussrichtung ist mittels eines Pfeils angedeutet. Das gespannte Gewebegitter 2 steht vertikal senkrecht zur Luftströmung in einem Luftkanal oder einer Luftansaugöffnung.

Die Luftströmung durchströmt, wie aus der Figur 4 deutlich wird, das Gewebeband 2 zweimal, nämlich einerseits die der Luftströmung zugewandte Vorderseite 2a des Gewebebands 2 und anschließend die Rückseite 2b des Gewebebands 2. Auf diese Weise werden Schneepartikel, die durch die Vorderseite 2a des Gewebegitters 2 noch nicht herausgefiltert wurden, mit hoher Wahrscheinlichkeit beim Durchströmen durch die Rückseite 2b des Gewebegitters 2 herausgefiltert. Auf diese Weise werden sehr gute Filterergebnisse erreicht.

Durch das kontinuierliche oder intermittierende Weiterfördern des Bandes 2 während des Filterbetriebs wird der mit Schnee beaufschlagte Abschnitt der Bandfläche 2 in den Bereich der beheizten Rolle 3 weiterbefördert und dort erwärmt. Schnee und Eis schmelzen dadurch ab. Das Schmelzwasser tritt nach unten in einen Abfluss 8 oder in einen Wassersammelkasten 6 ein.

Während die Antriebsrolle 4 von einem Antrieb 5 angetrieben wird, sind innerhalb und außerhalb des Mantels der Heizrolle 3 Heizelemente 9 bzw. 10 angeordnet. Die Heizelemente 9 und 10 erwärmen die Mantelfäche der Heizrolle 3, um Eis und Schnee aus dem Gewebeband 2 während des Kontakts mit der Heizrolle 3 abzuschmelzen und/oder das Gewebeband 2 abzutrocknen.

Alternativ zur Anordnung von Heizelementen 9 und 10, wie in der Figur 4 gezeigt, können auch lediglich Heizlemente 9 innerhalb der Heizrolle 3, lediglich Heizelemente 10 außerhalb der Mantelfläche der Heizrolle 3 oder Heizelemente 9, 10 sowohl innerhalb als auch außerhalb der Mantelfläche der Heizrolle 3 angeordnet sein.

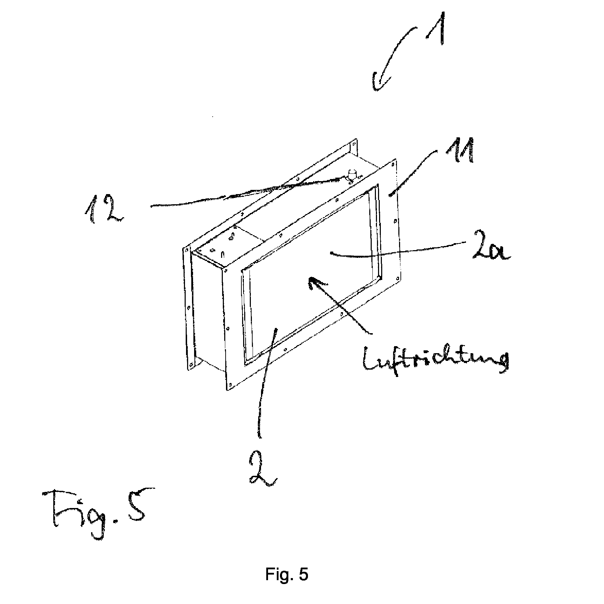

In der Figur 5 ist eine erfindungsgemäße Filtervorrichtung 1 dargestellt, die als kompakte Einschubeinheit ausgebildet ist. Die Filtervorrichtung 1 kann entweder seitlich in einem Strömungskanal und/oder vor oder hinter einer **Auslassöffnung angeordnet werden.**

Die in einem Strömungskanal angeordnete Einheit 1 filtert die im Wesentlichen senkrecht auf die Vorderseite 2a des Gewebebandes auftreffende Luft (die Strömungsrichtung ist durch einen Pfeil angedeutet). Das Gewebeband 2 ist durch die innerhalb des Gehäuses bzw. an einem **Rahmen 11 angeordnete Heizrolle 3 und Antriebsrolle 4 vorgespannt.** Durch eine Veränderung des Abstandes der Rollen 3 und 4 kann die Spannung des Gewebebandes 2 eingestellt werden. Dies ist in der Figur 5 durch den Spannbereich 12 angedeutet.

Insgesamt stellt die Erfindung eine Filtervorrichtung 1 bereit, die Wasser enthaltende Partikel sicher und zuverlässig über einen langen Zeitraum aus einem Luftstrom entfernen kann. Dies wird erreicht, indem das Filtermedium 2 während des Filterbetriebs kontinuierlich oder intermittierend abschnittsweise von Vereisungen und Feuchtigkeit befreit wird. In dem Abschnitt des Gewebebandes 2, der in Kontakt mit der von Heizelementen 9,10 beheizten Heizrolle 3 steht, werden die im Gewebeband 2 eingelagerten Eis- und Schneepartikel zum Schmelzen gebracht und das Gewebeband 2 bei hohen Temperaturen getrocknet. Auf diese Weise wird das Gewebeband 2 kontinuierlich gesäubert und die einwandfreie Funktion der Filtervorrichtung 1 gewährleistet.

## Patentansprüche

1. Filtervorrichtung (1) zum Abscheiden von Partikeln aus einem Luftstrom, insbesondere von schnee-, eis- oder wasserhaltigen Partikeln, umfassend ein Filtermedium (2) zum Herausfiltern von Partikeln aus dem Luftstrom,
**dadurch gekennzeichnet, dass**die Filtervorrichtung (1) Beheizungsmittel zum Beheizen wenigstens eines Abschnitts des Filtermediums (1) aufweist.

2. Filtervorrichtung (1) nach Anspruch 1,
**dadurch gekennzeichnet, dass**das Filtermedium (2) derart bewegbar angeordnet ist, dass ein im Luftstrom angeordneter erster Abschnitt des Filtermediums (2) als ganzes oder abschnittsweise in den Wirkungsbereich der Beheizungsmittel bewegbar ist.

3. Filtervorrichtung (1) nach einem der Ansprüche 1 oder 2,
**dadurch gekennzeichnet, dass**die Beheizungsmittel in einem Bereich außerhalb des Luftstroms angeordnet sind.

4. Filtervorrichtung (1) nach einem der vorhergehenden Ansprüche,
**dadurch gekennzeichnet, dass**das Filtermedium (2) als beschichtetes oder unbeschichtetes Gewebeband ausgebildet ist, insbesondere als Fasergewebe oder Drahtgewebe, insbesondere als Gewebegitter aus Metall, beispielsweise aus Edelstahl.

5. Filtervorrichtung (1) nach einem der vorhergehenden Ansprüche,
**dadurch gekennzeichnet, dass**das Filtermedium (2) als endloses Band ausgebildet ist.

6. Filtervorrichtung (1) nach einem der vorhergehenden Ansprüche,
**dadurch gekennzeichnet, dass**die Filtervorrichtung (1) wenigstens eine Rolle (3, 4) zur Führung des Filtermediums (2) aufweist.

7. Filtervorrichtung (1) nach Anspruch 6,
**dadurch gekennzeichnet, dass**die Rolle als eine von einem Antrieb (5; 5') antreibbare Transportrolle (4) ausgebildet ist.

8. Filtervorrichtung (1) nach Anspruch 7,
**dadurch gekennzeichnet, dass**der Antrieb (5; 5') für einen kontinuierlichen und/oder intermittierenden Antrieb der Transportrolle (4) ausgebildet ist.

9. Filtervorrichtung (1) nach einem der vorhergehenden Ansprüche,
**dadurch gekennzeichnet, dass** die Beheizungsmittel wenigstens eine Heizrolle (3) und eine der Heizrolle (3) zugeordnete Heizeinrichtung (9, 10) zum Erwärmen der Heizrolle (3) umfassen.

10. Filtervorrichtung (1) nach Anspruch 9,
**dadurch gekennzeichnet, dass**die Heizrolle (3) einen inneren Hohlraum aufweist, in dem die Heizrichtung (9) angeordnet ist.

11. Filtervorrichtung (1) nach einem der Ansprüche 9 oder 10,
**dadurch gekennzeichnet, dass** die der Heizrolle (3) zugeordnete Heizeinrichtung (10) benachbart zu der Heizrolle (3) derart angeordnet ist, dass die Mantelfläche der Heizrolle (3) von außen durch die Heizeinrichtung (10) erwärmbar ist.

12. Filtervorrichtung (1) nach einem der vorhergehenden Ansprüche,
**dadurch gekennzeichnet, dass**die Filtervorrichtung (1) wenigstens zwei Rollen (3, 4) aufweist, deren relativer Abstand veränderbar ist.

13. Filtervorrichtung (1) nach Anspruch 12,
**dadurch gekennzeichnet, dass**die wenigstens zwei Rollen (3, 4) jeweils im Wesentlichen vertikal angeordnet sind.

14. Filtervorrichtung (1) nach einem der vorhergehenden Ansprüche,
**dadurch gekennzeichnet, dass**die Filtervorrichtung (1) eine erste Führungsschiene (13) zur Führung des Filtermediums (2) aufweist.

15. Filtervorrichtung (1) nach einem der vorhergehenden Ansprüche,
**dadurch gekennzeichnet, dass**die Filtervorrichtung (1) eine zweite Führungsschiene (14) zur Führung des Filtermediums (2) aufweist.

16. Filtervorrichtung (1) nach Anspruch 15,
**dadurch gekennzeichnet, dass**die zweite Führungsschiene (14) als Wassersammelkasten (6) zum Sammeln des aus dem Filtermedium (2) ausgetretenen Wassers ausgebildet ist.

17. Filtervorrichtung (1) nach einem der vorhergehenden Ansprüche,
**dadurch gekennzeichnet, dass**die Filtervorrichtung (1) als kompakte Einheit ausgebildet ist.
